# EUROPEAN PATENT SPECIFICATION

(11) **EP 4 247 564 B1**
(45) Date of publication and mention of the grant of the patent: **27.05.2026**
(21) Application number: 21819582.4
(22) Date of filing: 19.11.2021
(51) Int. Cl.: B03C 1/01, B03C 1/28, G01N 1/10, G01N 35/00, B03C 1/033

(54) **SYSTEMS AND METHODS FOR PROCESSING A FLUID SAMPLE**
SYSTEME UND VERFAHREN ZUR VERARBEITUNG EINER FLÜSSIGKEITSPROBE
SYSTEMES ET PROCEDES DE TRAITEMENT D'UN ECHANTILLON DE FLUIDE

(30) Priority: 19.11.2020 US 202063115928 P
(43) Date of publication of application: 27.09.2023
(73) Proprietor: DH Technologies Development PTE. Ltd., Singapore 739256 (SG)
(72) Inventor: LIU, Chang, Concord, Ontario L4K 4V8 (CA)
(74) Representative: Maiwald GmbH
(86) International application number: PCT/IB2021/060771
(87) International publication number: WO 2022/107080

(56) References cited:
- EP-A1- 2 581 746
- EP-A2- 2 440 941
- EP-B1- 2 440 941
- WO-A1-2009/129415
- US-A1- 2004 229 346
- US-A1- 2005 287 577
- US-A1- 2018 369 831
- US-A1- 2019 346 435
- US-B2- 9 557 326

## Description

### Background

Analytical techniques for sampling typically trade-off the convenience of on-site analysis and testing with analytical sensitivity and accuracy. In order to obtain higher degrees of sensitivity and accuracy, a physical sample removed from its in situ location is physically transported to a testing laboratory for analysis.

By way of example, in environmental testing of water bodies a field operative travels to a site location to retrieve a physical sample from the site location. Commonly a plurality of samples are required at multiple site locations, such as points along a water body or about a water shed. The field operative must then carry the physical samples back from the field for delivery to a convenient testing laboratory. The size of the physical samples that may be delivered to the testing laboratory may practically be limited due to transport limitation considerations. Similar limitations apply to other bodies to be sampled, such as process fluids, tailings sites, air and gas samples, etc.

In some cases, the quality of test results may be impacted by a variety of factors related to the sampling process. For instance, in cases where the analysis is intended to detect small quantities of analyte present within a body to be sampled, such as a chemical in a water body or process fluid, the ability to successfully detect the analyte may be impacted by the physical quantity of sample retrieved from the sampling location. In other cases the time to transport the sample back to the testing laboratory may impact the ability to test for a particular analyte. US 2004/0229346 A1 discloses a micro-particle array for capturing target molecules of biological origin. US 2005/0287577 A1 discloses the capturing of particles by aggregating a porous material. EP 2 581 746 A1 discloses a sample analyzing device using magnetic particles.

### Summary

In one aspect, the technology relates to a method according to claim 1. In an example, activating the first electromagnetic trap includes switching an electrical signal being received by the first electromagnetic trap from a DC current to an AC current. In another example, deactivating the first electromagnetic trap includes terminating an electrical signal sent to the first electromagnetic trap. In yet another example, introducing the first batch of magnetic particles and introducing the flow of the fluid sample are performed substantially simultaneously. In still another example, introducing the flow of the fluid sample includes flowing the fluid sample through the first electromagnetic trap between the first open end and the second open end.

In another example of the above aspect, the method further including, subsequent to activating the first electromagnetic trap, trapping the first batch of magnetic particles within the first electromagnetic trap while substantially simultaneously flowing the fluid sample through the first electromagnetic trap between the first open end and the second open end. In an example, the AC current received by the first electromagnetic trap mixes the magnetic particles and the fluid sample within the first electromagnetic trap. In another example, the fluid conduit further includes a second electromagnetic trap disposed upstream of the first electromagnetic trap, and wherein introducing the first batch of magnetic particles into the fluid conduit includes introducing the first batch of magnetic particles into the first open end of the fluid conduit, and wherein the method further includes: after activating the first electromagnetic trap, introducing a second batch of magnetic particles into the first open end, wherein the second batch of magnetic particles include a second receptor to bind a second target analyte in the fluid sample; and activating the second electromagnetic trap to trap the second batch of magnetic particles within the second electromagnetic trap. In yet another example, the fluid conduit further includes a second electromagnetic trap disposed upstream of the first electromagnetic trap, a first introduction channel disposed immediately upstream of the first electromagnetic trap, and a second introduction channel disposed immediately upstream of the second electromagnetic trap, and wherein the method further includes: introducing the first batch of magnetic particles into the first introduction channel; introducing a second batch of magnetic particles into the second introduction channel; and activating the second electromagnetic trap to trap the second batch of magnetic particles within the second electromagnetic trap. In still another example, the fluid sample flowrate through the fluid conduit is greater than about 1 liter per minute.

In another aspect, the technology relates to a system according to claim 7. In an example, the first electromagnetic trap includes a plurality of electromagnets disposed around the fluid conduit. In another example, the system further including a second electromagnetic trap disposed between the first open end and the first electromagnetic trap. In yet another example, the system further including a first introduction channel fluidically coupled to the fluid conduit and disposed immediately upstream of the first electromagnetic trap. In still another example, the system further including: a first introduction channel fluidically coupled to the fluid conduit and disposed immediately upstream of the first electromagnetic trap; and a second introduction channel fluidically coupled to the fluid conduit and disposed immediately upstream of the second electromagnetic trap.

In another example of the above aspect, the system further including a first introduction channel fluidically coupled to the fluid conduit and disposed between the first electromagnetic trap and the second electromagnetic trap. In an example, the system further including a collector disposed downstream of the second open end of the fluid conduit. In another example, the system further including a controller operably connected to the first electromagnetic trap and configured to control the electrical signal sent to the at least one electromagnet.

In an example, the system includes a pump including an inlet and an outlet; the fluid conduit is disposed upstream of the pump, the second open end is disposed immediately upstream of the pump inlet,; and the controller is operably connected to the pump, wherein the controller is configured to control the electrical signal sent to the at least one electromagnet and to provide a control signal to the pump. In an example, the system further including a container disposed downstream of the pump outlet. In another example, the system further including an introduction channel connected to the fluid conduit immediately upstream of the first open end.

In an example of the system or method, the first electromagnetic trap is defined by a first volume and the fluid sample has a second volume greater than the first volume. In an example, the system includes a plurality of magnetic particles configured to mix within the first electromagnetic trap in response to the electrical signal.

### Brief Description of the Drawings

FIG. 1 is a schematic view of a sampler for processing a fluid sample.
FIGS. 2A- 2C are schematic views of example electromagnetic traps for processing a fluid sample.
FIGS. 3A(i) - 3(A)(iii) depict an example system for processing a fluid sample, at various stages of a processing or sampling event.
FIG. 3B depicts another example system for processing a fluid sample.
FIGS. 3C(i) and 3C(ii) depict another example system for processing a fluid sample, at various stages of a processing or sampling event.
FIG. 3D depicts another example system for processing a fluid sample.
FIGS. 4A - 4D depict example methods for processing a fluid sample.
FIG. 5 depicts an example of a suitable operating environment in which one or more of the present examples can be implemented.

### Detailed Description

Magnetic particles have been used in biochemical analysis to assist with automating assay protocols in the laboratory while maintaining sensitivity and accuracy. Since magnetic particles are typically produced as nanoscale or microscale particles, handling process are focused around processing small volumes of sample fluid (e.g. microliter volumes). In some cases, the use of magnetic particles may be integrated into a microfluidic devices for convenience of handling and processing. See, for instance, U.S. Patent No. 8,585,279, "Device and Method for Manipulating and Mixing Magnetic Particles in a Liquid Medium" (Rida). While these systems may be helpful for processing clean bio samples, they are not practical for conducting sampling of fluid bodies. Such fluid bodies may include bodies of water such as lakes or rivers, effluent streams, discharge sources from manufacturing or other facilities, etc. The technologies described herein allow fluid samples from such bodies to be processed or sampled at the source, without drawing and distributing precise amounts of fluid in controlled laboratory processes, as typical in the art. The technologies described herein use flow-through structures that trap the magnetic particles therein, ensuring desirable mixing between the particles and the fluid sample flowing therethrough. As such, the sample fluid volumes that may be processed are in the range of milliliters, centiliters, liters (or many multiples thereof), as opposed to the small-scale quantities typically processed in a laboratory setting. Multiple batches of magnetic particles, each coated with different reagents, may be used simultaneously to test for the presence of multiple analytes in a fluid body. Further, samples may be drawn directly from and released back into the fluid body, obviating the need for careful fluid removal and discharge procedures.

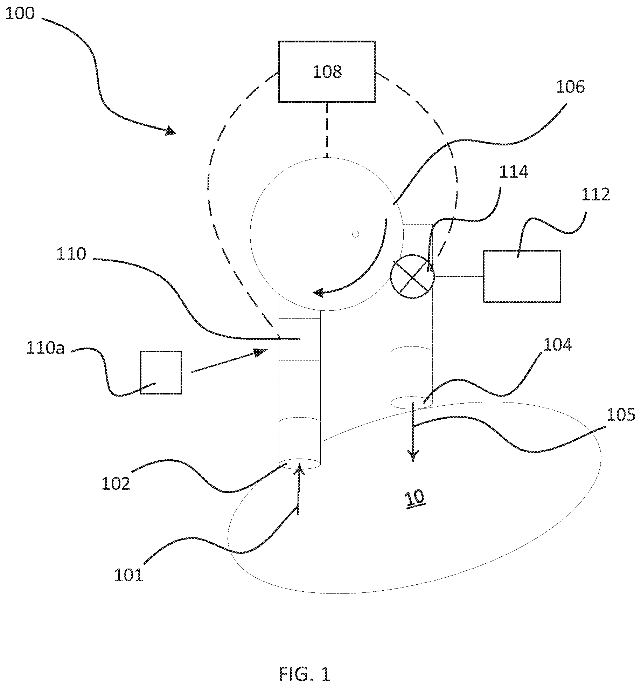

FIG. 1 is a schematic view of a sampler 100 for sampling and processing a volume of fluid 101 from a body of fluid 10 (examples of which are described above, or would be further apparent to a person of skill in the art). The sampler 100 includes an inlet 102 for drawing an intake volume of fluid 101 from the body of fluid 10 and an outlet 104 for expelling an output volume of fluid 105. The output volume of fluid 105 may be returned, for instance, into the body of fluid 10, or to a vessel or container (not shown) for disposal.

The sampler 100 includes at least one sampling region 110 for collecting and/or identifying sample from the intake volume of fluid 101. The sampling region 110 situated in the flow path between the inlet 102 and the outlet 104 and operative to retain or confine sampling particles within the sampling region 110 against a flow of the volume of fluid being sampled. The sampling particles are magnetic as known in the art. The sampler 100 may further optionally include a fluid pump 106 for drawing a portion of fluid from the body of fluid 10 and flowing the portion of fluid through the sampling region 110 before expelling the portion of fluid from the outlet 104. The fluid pump 106 may be situated either between the sampling region 110 and the outlet 104 or the inlet 102, provided it is fluidly connected to the flow path connecting the inlet 102 and outlet 104. In FIG. 1, the fluid pump 106 is illustrated as being situated between the sampling region 110 and the outlet 104.

A controller 108 may optionally be provided for controlling and/or recording operation of the sampler 100. In both examples, the sampler 100 is operative to expose the sampling region 110 to a known volume of sample fluid drawn from the body of fluid 10. For example, in some examples, the controller 108 may be operative to control operation of the fluid pump 106 to draw a pre-determined volume of fluid from the body of fluid 10 and to flow the pre-determined volume of fluid through the sampling region 110. The pre-determined volume of fluid may be metered, for instance, by the controller 108 operating the fluid pump 106 at a fixed flow rate for a period of time to draw the pre-determined volume of fluid from the body of fluid 10. In some examples, the controller 108 may be operative to detect and/or measure a volume of fluid drawn by the sampler 100 from the body of fluid 10, for instance by measuring a flow of fluid through the sampler 100 with a flow meter, or calculating the volume of fluid drawn through the sampler 100 based on a speed of the fluid pump 106, current drawn by the fluid pump 106, pump frequency, or other measurement of pump operation and a time of pump operation while under load and drawing fluid.

The sampler 100 may be further operative to monitor a flow rate of the volume of fluid through the sampling region 110 to control operation of the fluid pump 106 to avoid flushing magnetic particles out of the sampling region. Example configurations of sampling regions, as well as operation of the components associated therewith, are described below. The controller 108 may control operation of the various components, for example, by delivering appropriate signals to the various components at predetermined times or for predetermined time periods. The controller 108 may further adjust the volumetric flow rate of the pump 106 based on detection of the flushing-away of magnetic particles out of the sampling region 110. The function of the electromagnets of the sampling region 110, in general and relative to the magnetic particles retained therein during sampling operations, are described in further detail below.

In some examples, the sampler 100 may be operative to associate an extraction of a volume of fluid and exposure of the extracted volume of fluid to the sampling region 110 with a sampling event. The sampling event includes at least one physical and/or time location parameter corresponding to that extraction. For instance, the controller 108 may be operative to record physical location data, such as GPS, gyroscopic, survey markings, etc. representative of a sampling location of the sampling event. The controller 108 may further be operative to record a time location data representative of a sampling time and/or date of the sampling event. In some aspects, the sampler 100 may further be operative to associate a sample volume information with the sampling event, the sample volume information representative of a volume of fluid exposed to the sampling region 110. In some examples, the sampling region 110 may include a cartridge that is mechanically separable from the sampler 100. In some aspects, the controller 108 may be further operative to record a cartridge identifier corresponding to the cartridge exposed to the volume fluid in association with the sampling event. The cartridge identifier may include a physical identifier located on the cartridge, such as a serial number, bar code, or other physical identifier. In other examples, a collector or other capture vessel 112 may be fluidically coupled to an outlet of the fluid pump 106, so as to capture magnetic particles released from the sampling region 110 during appropriate times of a sampling event. In examples, a valve 114 may be actuated to direct flow from the outlet of the pump 106 to the capture vessel 112. The valve 114 may be manually actuated or it may include a motorized actuator so as to be controlled from the controller 108.

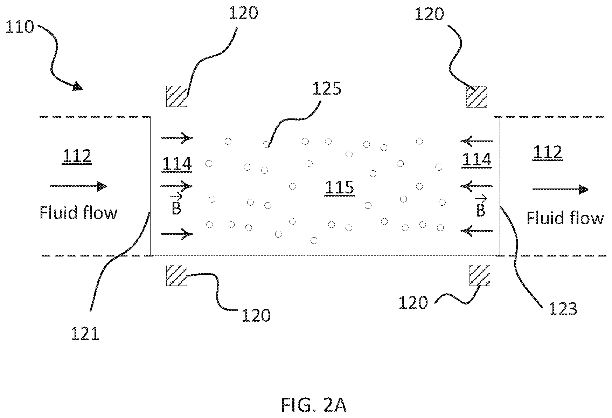

FIG. 2A is a schematic view of an example electromagnetic trap for processing a fluid sample having a flow-through sampling region 110 for sampling one or more target analytes in from a sampled volume of fluid. The sampling region 110 is defined by an open first end 121 into which a fluid sample flows, and an open second end 123 out of which the fluid sample flows. The sampling region 110 includes a plurality of sampling particles confined within confinement region 115 of the sampling region 110. Sampling particles may include magnetic (e.g. ferromagnetic and/or paramagnetic) particles adapted to interact with the sampled volume of fluid to register a presence of one or more analytes. For instance, the particles may register a presence of an analyte by capturing the analyte on the surface of the particles by bonding. Alternatively, the particles may include a coating or treatment operative to interact with a target analyte and to evidence a change of condition that acts to register the presence of that target analyte.

In some examples, a single type of particle may be present in the confinement region 115. In some aspects a plurality of particle types may be present in the confinement region 115. Each particle type may be adapted to interact with a same analyte or may be adapted to interact with a different analyte. The particle types may also be adapted to have the same or different magnetic properties. In the case of the particle types having the same magnetic property they may be similarly manipulated by an applied magnetic field. In the case of the particle types having different magnetic properties, the different particle types may be separately manipulated and or separated from one another by one or more applied magnetic fields. In the example shown in FIG. 2A the sampling particles 125 include a single particle type for interacting with a target analyte in the sampled volume of fluid.

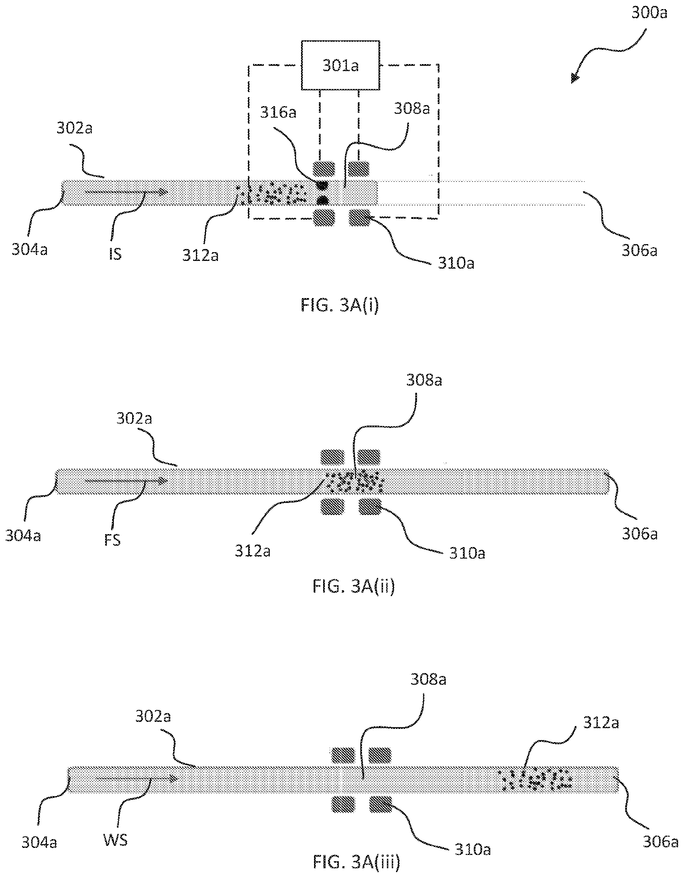

Sampling region 110 is situated to locate the confinement region 115 to interrupt a fluid flow path 112 such that sample fluid flows through the confinement region 115 to interact with the sampling particles 125. The confinement region 115 is delimited by a confining field 114, such as an electric, magnetic, and/or electromagnetic field, the confining field 114 operative to interact with the sampling particles 125 and to confine the sampling particles 125 within the confinement region 115. As such, the sampling region 110 acts as an electric, magnetic, and/or electromagnetic trap that utilizes a confining field 114 to permit relatively free passage of the sample fluid through the sampling region 110 while retaining the sampling particles 125 within the confinement region 115. Control elements (not shown) are used to establish the confining field 114 to confine and/or manipulate the sampling particles 125 within the confinement region 115. In some examples an additional mixing field may be applied to physically manipulate the sampling particles 125 within the confinement region 115. In some examples the confining field 114 may be operative to both confine the sampling particles 125 and to manipulate the sampling particles 125 within the confinement region 115. The various confining and manipulating functions are initiated by signals sent from one or more control elements (such as the controller depicted in FIGS. 1 and 3A(i)) to the confining and mixing elements described below. These signals activate the various functionalities of the confinement region 115.

In the example shown in FIG. 2A, the control elements include confining elements 120 operative to establish the confining field 114 as a confining magnetic field. In the example, the confining elements 120 may include confinement magnets such as permanent or electromagnets of suitable strength to retain the sampling particles 125 within the confinement region 115 against the fluid flow through the fluid flow path 112. The confining field 114 may be equal at both the inlet at the open first end 121 and outlet at the open second end 123 from the confining region 114, or the confining field 114 may be unbalanced, for instance to provide a greater confining field 114 at the outlet to resist the fluid flow out of the confinement region 115.

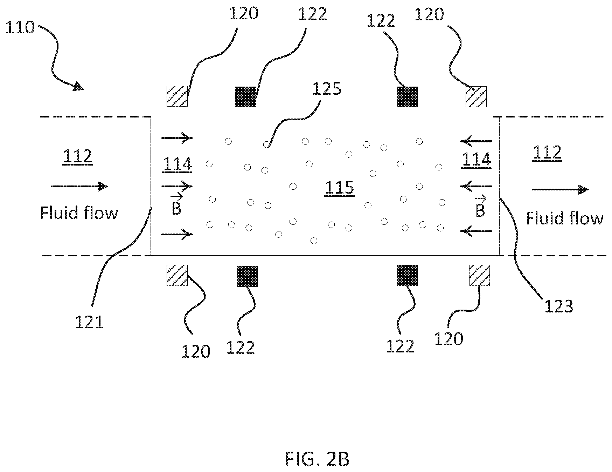

FIG. 2B is another schematic view of an example electromagnetic trap for processing a fluid sample having a sampling region or trap 110 where the control elements include both confining elements 120 and mixing elements 122. The confining elements 120 are operative to apply a confining field 114 to confine the sampling particles 125 within the confinement region 115 while the mixing elements 122 are operative to apply a mixing field to manipulate the sampling particles 125 within the confinement region 115 to physically locate and/or transport the sampling particles 125 within the confinement region 115 in response to the mixing field applied by the mixing elements 122. The mixing field may include, for instance a varying electromagnetic field to draw and circulate the sampling particles 125 within the confinement region 115.

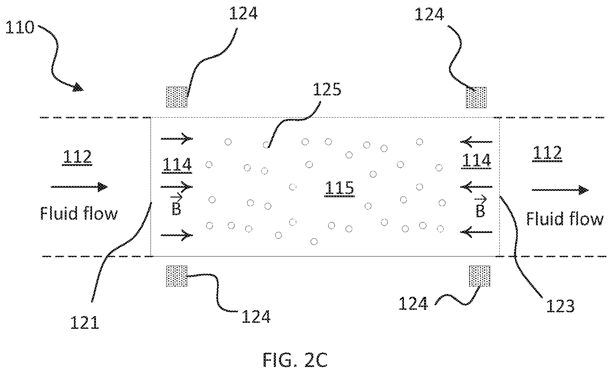

The example shown in FIG. 2C presents a sampling region 110 where the control elements include confining and mixing elements 124 that are operative to provide both confining fields and a mixing field or a single field that provides both confinement and mixing. The confining and mixing elements 124 both confine the sampling particles 125 within the confinement region 115 and manipulate the sampling particles 125 within the confinement region 115 to physically locate and/or transport the sampling particles 125 within the confinement region 115.

In some examples, multiple control element sets may be provided for each sampling region 110, for instance where the sampling region 110 includes a removable cartridge that may be removably engaged with the sampler 100 during sampling and released from the sampler 100 for storage and/or transport. For example, a removable sampling region 110 may be provided with a relatively low strength set of confining elements 120, such as permanent magnets, for retaining the sampling particles 125 within the confinement region 115 during storage and transport. A different sampling region 110a, having a relatively high strength set of confining elements 120, such as permanent or electromagnetic magnets, may be provided when the cartridge is engaged in the sampler 100 to maintain confinement against the fluid flow directed by the sampler 100 through the sampling region 110.

In other examples, additional physical control elements may be provided to confine the sampling particles 125 within the confinement region 115 during storage and transport. Removal of the physical control elements allowing for fluid passage through the sampling region 110. In some aspects, the sampling region 110 may be removably engaged with the sampler 110 to locate control elements attached to the sampler 110 about the confinement region 115 to establish a confining field 114 about the confinement region 115. After the engagement, physical control elements associated with the sampling region 110 for retaining the sampling particles 125 within the confinement region may be withdrawn to allow fluid passage of the sampling fluid through the confining region 115.

FIGS. 3A(i)-3A(iii) depict a system 300a for processing a fluid sample, at various stages of a processing or sampling event. The system 300a includes a fluid conduit 302a having a first open end 304a and a second open end 306a. Both a fluid sample FS and magnetic particles 312a can be received through the first open end 304a and released through the second open end 306a, as described in more detail herein. The system 300a further includes a first electromagnetic trap 308a positioned between the first open end 304a and the second open end 306a. In certain examples, the first electromagnetic trap may be defined by a first volume, and the fluid sample FS passing through the first electromagnetic trap may be a second volume, which is greater than the first volume. In the depicted example, the first electromagnetic trap 308a includes a plurality of electromagnets 310a. The electromagnets 310a are operably connected to a controller 301a, described elsewhere herein, for example, in FIG. 1. The controller 301a is only shown in FIG. 3A(i) for illustrative purposes, but a person of ordinary skill in the art would readily understand a controller can be incorporated into other example systems described herein, even if such a controller is not illustrated in those examples. The electromagnets 310a may be disposed at various locations around the fluid conduit 302a. The electromagnetic trap 308a is activated upon receipt of an electrical signal from the controller 301a. This signal, which may be characterized by a DC or AC current, generates a magnetic field within the first electromagnetic trap 308a. In this example, the electromagnets 310a may be configured to receive electrical signals to enable both confinement and mixing of the magnetic particles 312a, for example, as depicted and described in FIG. 2C above. In another example, however, the electromagnetic trap may be configured such that the electromagnets perform only the confining function described in the context of FIG. 2A. In another example discrete electromagnets for confining and discrete electromagnets for mixing, as depicted in FIG. 2B, may be utilized. A person of ordinary skill in the art, upon reading this disclosure, would readily understand any modifications required to the system 300a to incorporate the latter two arrangements of electromagnets.

In the example depicted in FIG. 3A(i), the electromagnets 310a are receiving an electrical signal characterized by a DC current. When DC current is applied to the electromagnets 310a, the first electromagnetic trap 308a is activated by the electrical signal and any magnetic particles 312a introduced to the fluid conduit 302a will bind proximate the locations of the electromagnets 310a. In this example, the magnetic particles 312a may be introduced to the fluid conduit 302a in an introduction solution IS of non-reactive fluid such as saline, "clean" water (e.g., relative to the fluid source being tested), distilled water, etc. In this example, the DC current stops the magnetic particles 312a from flowing through the first electromagnetic trap 308a, provided the volumetric flow rate, viscosity, or other characteristic of the introduction solution IS is not of a condition to dislodge the magnetic particles 312a from their bound locations proximate the electromagnets 310a. InFIG. 3A(i), the bound locations of the magnetic particles are identified by reference numeral 316a, and the electrical signal is sent only to the upstream pair of electromagnets 310a. In other examples, DC current may be sent to the downstream pair of electromagnets 310a as well, so all four electromagnets 310a depicted in FIG. 3A(i)are receiving an electrical signal. In this example, the magnetic particles 312a will still primarily bind proximate the upstream pair of electromagnets 310a. In an alternative example, DC current may be sent only to the downstream pair of electromagnets 310a.

FIG. 3A(ii) depicts a subsequent stage of a sampling event performed with the system 300a. After activating the first electromagnetic trap 308a by sending an electrical signal of a DC current to the electromagnets 310a, the electrical signal is switched to an AC current. In this example, AC current is sent to both the upstream pair and downstream pair of electromagnets 310a. Terminating the DC current causes the magnetic particles 312a to release from their bound locations 316a and flow into the first electromagnetic trap 308a, where the AC current applied to the electromagnets 310a results in mixing of the magnetic particles 312a within the first electromagnetic trap 308a. Other examples of how AC current may be sent to the electromagnets 310a to enable mixing are described in U.S. Pat. App. Pub. No. 2018/0369831. The first electromagnetic trap 308a remains activated when AC current is being received and the magnetic particles 312a are prevented from flowing out of the first electromagnetic trap 308a due to the magnetic field within the first electromagnetic trap 308a.

In another example, the electrical signal being received by the first electromagnetic trap 308a may be set to an AC current before the first batch of magnetic particles 312a are introduced into the fluid conduit 302a, or during the introduction thereof. More specifically, DC current need not be sent to the electromagnets 310a prior to the AC current. By initially setting the electrical signal to AC current, mixing of the magnetic particles 312a within the first electromagnetic trap 308a would begin immediately upon the magnetic particles 310a reaching that location. This obviates the need to switch the electrical signal from DC current to AC current. Once the magnetic particles 312a are mixing within the first electromagnetic trap 308a, a fluid sample FS may be introduced to the fluid conduit 302a through the first open end 304a, and may flow through the first electromagnetic trap 308a, thereby mixing with the magnetic particles 312a therein. During flow of the fluid sample FS through the first electromagnetic trap 308a, the magnetic particles 312a remain trapped therein, so long as the flow of the fluid sample FS through the first electromagnetic trap 308a is not of a flow rate or characteristic sufficient to overcome the magnetic field generated. Fluid sample characteristics that may cause dislodgement of the magnetic particles 312a include, but are not limited to, high viscosity, presence of physical pollutants such as sediment, etc.

FIG. 3A(iii) depicts a subsequent stage of a sampling event performed with the system 300a. Here, the electrical signal being sent to the electromagnets 310a has been terminated, thereby deactivating the first electromagnetic trap 308a. The first electromagnetic trap 308a may be deactivated after a predetermined time period of fluid sample FS flow has passed, or after a predetermined volume of the fluid sample FS has flowed through the first electromagnetic trap 308a. By enabling mixing of the magnetic particles 312a with the fluid sample FS as the fluid sample FS flows through the electromagnetic trap 308a, a sufficient number of target analytes in the fluid sample should have bound to the receptors on the magnetic particles 312a. Once the electrical signal is terminated (thereby deactivating the first electromagnetic trap 308a), there is no longer a magnetic field binding the magnetic particles 312a within the first electromagnetic trap 308a. Thus, the magnetic particles 312a flow out of the first electromagnetic trap 308a towards the second open end 306a of the fluid conduit 302a. Once the magnetic particles 312a flow out of the second open end 306a of the fluid conduit 302a, they may be collected in a collector (e.g., as depicted above in the context of FIG. 1). The magnetic particles 312a may flow out of the electromagnetic trap 308a along with the fluid sample FS, or with a wash solution WS, which may be similar to the introduction solution IS. In other examples, the magnetic particles 312a may flow out of the electromagnetic trap 308a by increasing the flowrate of the fluid sample FS and without terminating the electrical signal. Thus, the magnetic field can remain activated within the electromagnetic trap 308a, but the increased flowrate is sufficient to overpower the magnetic field to release the magnetic particles 312a from the electromagnetic trap 308d and flush the magnetic particles 312a out of the electromagnetic trap 308a.

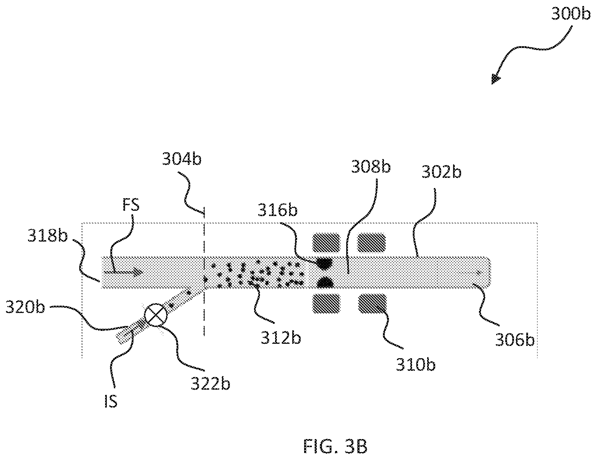

FIG. 3B depicts another example system 300b for processing a fluid sample. The system 300b includes a fluid conduit 302b having a first open end 304b and a second open end 306b. The system 300b further includes a first introduction channel 320b disposed immediately upstream of the first open end 304b. In this example, the magnetic particles 312b are received through the first introduction channel 320b, for example in an introduction solution IS of non-reactive fluid. A fluid sample FS is received through an open end of a fluid sample channel 318b. Both the fluid sample FS and the magnetic particles 312b are released through the second open end 306b upon completion of a processing or sampling event. Once the magnetic particles 312b are introduced into the first introduction channel 320b, the magnetic particles 312b can flow through the first open end 304b to the second open end 306b, being bound and mixed at various stages, as described elsewhere herein. The first introduction channel 320b may include a valve 322b, which can be closed after the magnetic particles 312b are introduced to prevent backflow of the fluid sample FS or magnetic particles 312b through the first introduction channel 320b.

In the example depicted in FIG. 3B, while the magnetic particles 312b are being introduced into the first introduction channel 320b, the upstream pair of electromagnetics 310b are receiving an electrical signal characterized by a DC current to stop the magnetic particles 312b at a bound location 316b. Thereafter, the sampling event can proceed with switching the electrical signal to AC current to enable both confinement and mixing of the magnetic particles 312b within the first electromagnetic trap 308b. Activating the first electromagnetic trap 308b is described elsewhere herein, for example, in FIGS. 3A(i) and 3A(ii). After the first electromagnetic trap 308b is activated, the fluid sample FS may be introduced into an open end of the fluid sample channel 318b. The fluid sample FS will flow through the first open end 304b and the second open end 306b while the magnetic particles 312b remain trapped in the first electromagnetic trap 308b.

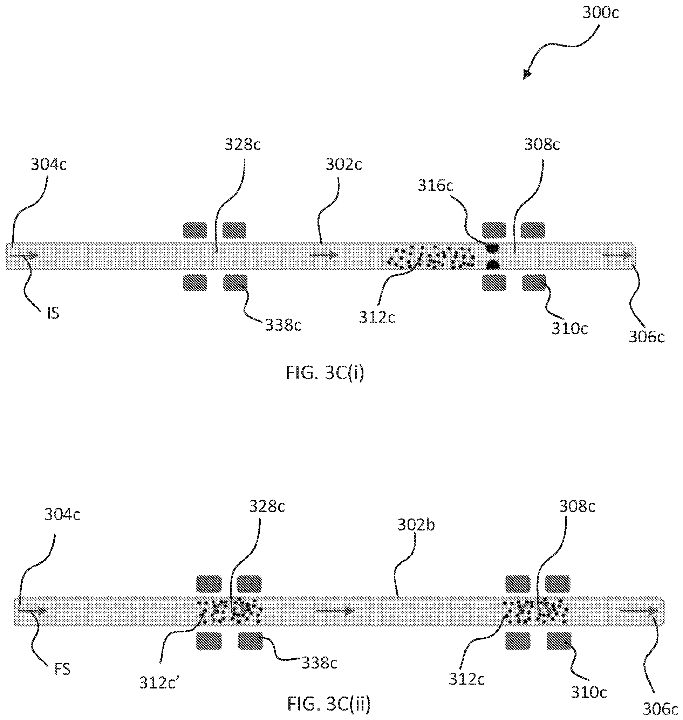

FIGS. 3C(i) and 3C(ii) depict a system 300c for processing a fluid sample having a first electromagnetic trap 308c and a second electromagnetic trap 328c at various stages of a processing or sampling event. The system 300c includes a fluid conduit 302c having a first open end 304c and a second open end 306c. The second electromagnetic trap 328c is disposed between the first open end 304c and the first electromagnetic trap 308c. Having two electromagnetic traps 308c, 328c creates two distinct mixing regions for magnetic particles within the fluid conduit 302c. The system 300c having two electromagnetic traps 308c, 328c may be used for sample processing that require two events, such as two reactions (e.g., immunocapture followed by a reduction or digestion reaction), or two extractions (e.g., extracting a first analyte followed by extracting a second analyte). Other example systems may have more than two electromagnetic traps disposed between the first open end and the second open end of a fluid conduit.

In the example system 300c, a fluid sample FS, a first batch of magnetic particles 312c, and a second batch of magnetic particles 312c' can be received through the first open end 304c and released through the second open end 306c, as described in more detail herein. The first batch of magnetic particles 312c and the second batch of magnetic particles 312c' may have different properties to enable different reactions or extractions to take place in the two electromagnetic traps, 308c, 328c. In other examples, the first batch of magnetic particles 312c and the second batch of magnetic particles 312c' may have the same properties. To load the magnetic particles 312c, 312c' into the fluid conduit 302c, the first batch of magnetic particles 312c are introduced first through the first open end 304c in an introduction solution IS. When the first batch of magnetic particles 312c(i) are introduced, the second electromagnetic trap 328c is deactivated to allow the first batch of magnetic particles 312c to flow therethrough without trapping. An electrical signal characterized by DC current is sent to the upstream pair of electromagnets 310c associated with the first electromagnetic trap 308c. When the first batch of magnetic particles 312c reach the upstream pair of electromagnets 310c associated with the first electromagnetic trap 308c, the DC current stops the magnetic particles 312c at the bound location 316c. Thereafter, activation of the first electromagnetic trap 308c continues by switching the electrical signal from DC current to AC current to cause mixing of the first batch of magnetic particles 312c within the first electromagnetic trap 308c.

During this mixing, the second batch of magnetic particles 312c' can be introduced through the first open end 304c of the fluid conduit 304c and an electrical signal characterized by DC current is sent to the upstream pair of electromagnets 338c associated with the second electromagnetic trap 328c. Thus, the second batch of magnetic particles 312c' will bind proximate the location of the electromagnets 338c associated with the second electromagnetic trap 328c, so as to be stopped from flowing through the second electromagnetic trap 328c. The electrical signal may then be switched from DC current to AC current thereby allowing the second batch of magnetic particles 312c' to move into the second electromagnetic trap 328c and mix therein.

After the magnetic particles 312c, 312c' are confined and mixing within their respective electromagnetic traps 308c, 328c, a fluid sample FS may be introduced through the first open end 304c, as depicted in FIG. 3C(ii). In this example, the first and second electromagnetic traps 308c, 328c remain activated while the fluid sample FS flows from the first open end 304c to the second open end 306. Thus, the magnetic particles 312c, 312c' remain confined and mixing within the electromagnetic traps 308c, 328c, so long as the flow of the fluid sample FS through the electromagnetic traps 308c, 328c, does not overcome the magnetic fields generated. When the sampling event is complete, the first electromagnetic trap 308c may be deactivated first, allowing the first batch of magnetic particles 312c to flow out the second open end 306c where they may be captured in a collector. Then, the second electromagnetic trap 328c may be deactivated, allowing the second batch of magnetic particles 312c' to flow through the deactivated first electromagnetic trap 308c and out the second open end 306c.

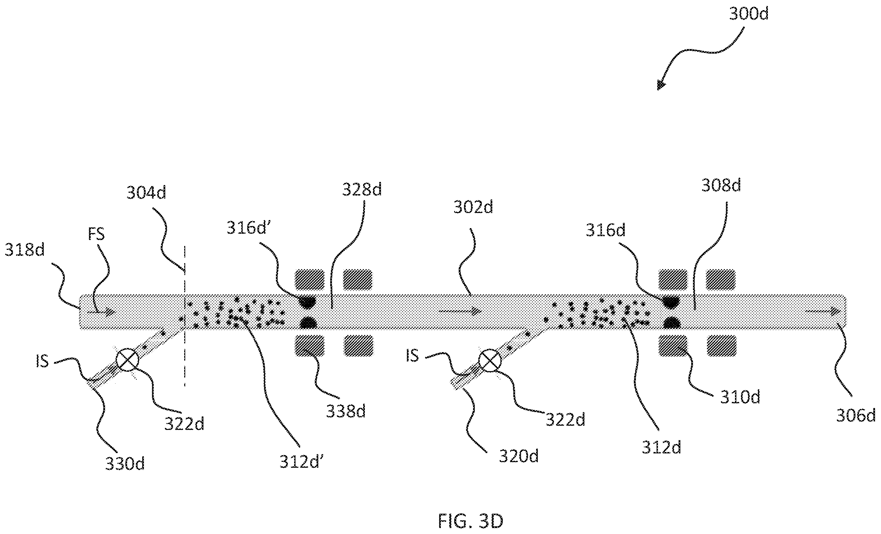

FIG. 3D depicts another example system 300d for processing a fluid sample having a first electromagnetic trap 308d and a second electromagnetic trap 328d. The system 300d includes a fluid conduit 302d having a first open end 304d and a second open end 306d. The second electromagnetic trap 328d is disposed between the first open end 304d and the first electromagnetic trap 308d. A first introduction channel 320d is disposed immediately upstream of the first electromagnetic trap 308d, and a second introduction channel 330d is disposed immediately upstream of the first open end 304d. In this example, a first batch of magnetic particles 312d are introduced to the fluid conduit 302d through the first introduction channel 320d, and a second batch of magnetic particles 312d' are introduced through the second introduction channel 330d. A fluid sample FS can be received through an open end of a fluid sample channel 318d. The magnetic particles 312d, 312d' and the fluid sample FS can be released through the second open end 306d.

To load the magnetic particles 312d, 312d' into the fluid conduit 302d through their respective introduction channels 320d, 330d, the magnetic particles 312d, 312d' may be introduced in an introduction solution IS of non-reactive fluid. The first batch of magnetic particles 312d and the second batch of magnetic particles 312d' can be introduced at substantially the same time, or at different times. The introduction channels 320d, 330d may each have a valve 322d, which can be closed at any time to prevent backflow therethrough. During introduction of the magnetic particles 312d, 312d', DC current is sent to the electromagnets 310d, 338d to stop the magnetic particles 312d, 312d' at the bound locations 316d, 316d', preventing them from flowing through the respective electromagnetic traps 308d, 328d. The signal sent to the electromagnetic traps 308d, 328d is then changed to AC current, thereby confining and mixing the magnetic particles 312d, 312d' within their respective electromagnetic traps 308d, 328d. A fluid sample FS can then be introduced through the open end of the fluid sample channel 318d. As the fluid sample FS flows through the first open end 304d to the second open end 306d, the electromagnetic traps 308d, 328d remain activated. The magnetic particles 312d, 312d' remain confined and mixing within the electromagnetic traps 308d, 328d as the fluid sample FS flows through, so long as the flow of the fluid sample FS through the electromagnetic traps 308d, 328d, does not overcome the magnetic fields generated therein.

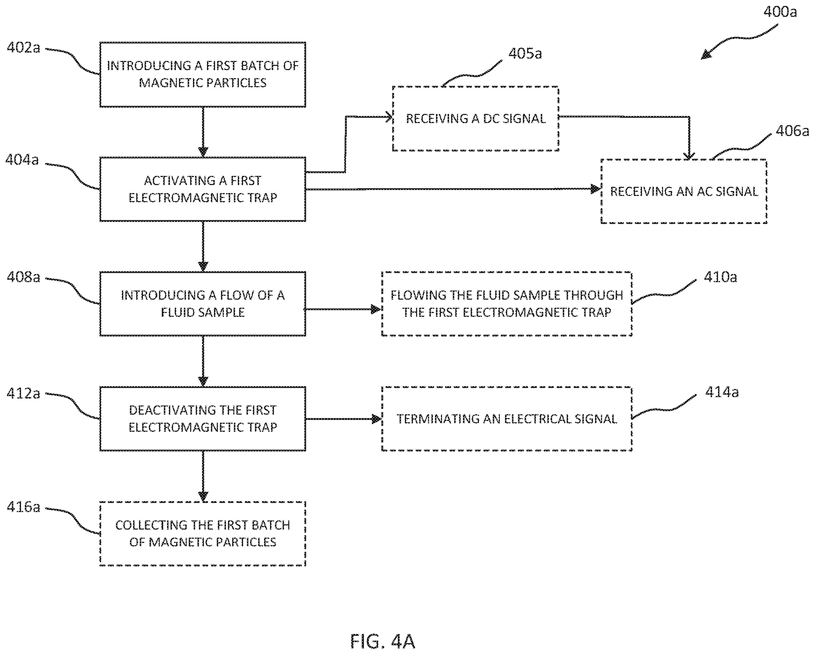

FIG. 4A depicts a method 400a for processing a fluid sample. The system for processing a fluid sample is described elsewhere herein, for example, in FIGS. 3A(i)-3A(iii). In brief, the system for processing a fluid sample includes a fluid conduit having a first open end, a second open end, and a first electromagnetic trap between the first open end and the second open end. In certain examples, the first electromagnetic trap is defined by a first volume between the open ends, and the fluid sample is a second volume greater than the first volume. In these examples, the fluid sample may be drawn continuously from a fluid body (e.g., a body of water, such as a lake, river, or stream) and the second volume of the fluid sample may be significantly greater than the first volume defining the first electromagnetic trap. For example, the first volume defining the first electromagnetic trap may be about 0.5L, and the second volume of the fluid sample may be about 1L, 2L, 5L, 10L, or more.

The method 400a begins with introducing a first batch of magnetic particles into the fluid conduit, operation 402a. The method 400a continues with activating the first electromagnetic trap to trap the magnetic particles within the first electromagnetic trap, operation 404a. In certain examples, activating the first electromagnetic trap includes applying an electrical signal characterized by a DC current to the electromagnets associated therewith, operation 405a. This causes the magnetic particles to bind proximate the locations of the electromagnets, so as to stop their flow through the first electromagnetic trap. Thereafter, activating the first electromagnetic trap may include switching the electrical signal being received by the first electromagnetic trap from the DC current to an AC current. In another example, the electrical signal being received by the first electromagnetic trap may be set to an AC current before the first batch of magnetic particles are introduced into the fluid conduit, or during the introduction thereof, operation 406a. The AC current received by the first electromagnetic trap causes the magnetic particles to move into and mix within the first electromagnetic trap. While a DC current or AC current is being received by the first electromagnetic trap, the magnetic particles remain confined within the first electromagnetic trap.

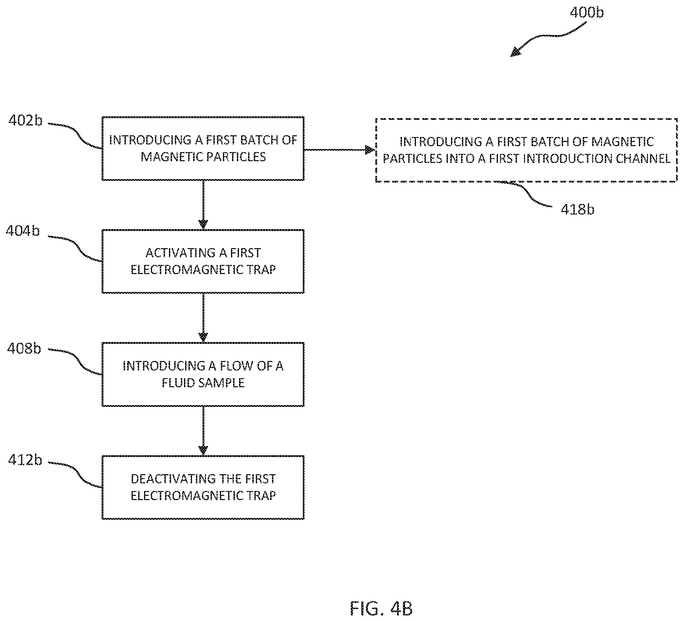

Thus, when a fluid sample is introduced to the fluid conduit, operation 408a, the magnetic particles more readily move and mix with the fluid sample due to the AC current within the first electromagnetic trap, improving binding of the target analytes in the fluid sample to the receptors on the magnetic particles. While FIG. 4A depicts discrete operations 402a and 408a, it is contemplated that the first batch of magnetic particles may be introduced along with the fluid sample, thereby trapping the first batch of magnetic particles within the first electromagnetic trap while substantially simultaneously flowing the fluid sample through the first electromagnetic trap. Introducing the flow of the fluid sample includes flowing the fluid sample through the first electromagnetic trap between the first open end and the second open end of the fluid conduit, operation 410a. After a predetermined time period, e.g., one generally sufficient to bind an adequate number of target analytes to the receptors on the magnetic particles, the first electromagnetic trap may be deactivated, operation 412a, which releases the magnetic particles from the first electromagnetic trap. Deactivating the first electromagnetic trap may include terminating the electrical signal being sent to the first electromagnetic trap, operation 414a. Once the electrical signal being sent to the first electromagnetic trap is terminated, a magnetic field is no longer generated, and the magnetic particles flow downstream toward and out of the second open end of the fluid conduit. The magnetic particles may be subsequently collected in a collector, operation 416a. As depicted elsewhere herein, such as in FIG. 1, the collector may be selectively fluidically coupled to the second open end via a valved connection. FIG. 4A depicts a method 400a of operating one example of a basic system for processing a fluid sample; the steps of the method 400a are similarly applicable to more complex systems using two or more electromagnetic traps, with or without one or more introduction channels. As such, FIGS. 4B-4D, below, do not necessarily depict every step required for operation of the various systems described herein, but such operations would be apparent to a person of skill in the art upon reading this disclosure.

FIG. 4B depicts another example method 400b for processing a fluid sample with a system having a first introduction channel, for example, as depicted in FIG. 3B. The method 400b begins with introducing a first batch of magnetic particles into a fluid conduit, operation 402b. Introducing the first batch of magnetic particles 402b includes introducing the first batch of magnetic particles into a first introduction channel disposed immediately upstream of a first open end. Thus, the first batch of magnetic particles can flow from the first introduction channel through the first open end, and towards a first electromagnetic trap.

The method 400b continues with activating the first electromagnetic trap to confine and mix the magnetic particles within the first electromagnetic trap, operation 404b. Activating the first electromagnetic trap 404b is described elsewhere herein, for example, in FIG. 4A. After the first electromagnetic trap is activated, introducing a flow of a fluid sample, e.g., into an open end of a fluid sample channel is performed, operation 408b. The fluid sample flows through the first electromagnetic trap between the first open end and the second open end of the fluid conduit, while the magnetic particles remain trapped and mixing within the activated first electromagnetic trap. After a predetermined time period or flow of fluid sample therethrough, the first electromagnetic trap is deactivated, operation 412b, which releases the magnetic particles from the first electromagnetic trap.

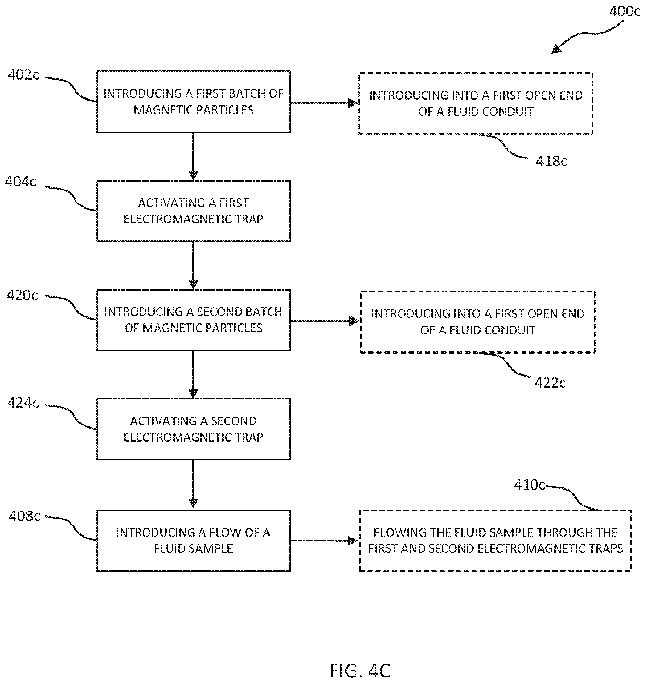

FIG. 4C depicts another example method 400c for processing a fluid sample with a system that includes a second electromagnetic trap disposed between a first open end and a first electromagnetic trap, for example, in FIGS. 3C(i)-(ii). The method 400c begins with introducing a first batch of magnetic particles into a fluid conduit, operation 402c, for example, via the first open end of the fluid conduit, operation 418c. When the first batch of magnetic particles are introduced into the first open end, the second electromagnetic trap is deactivated, allowing the first batch of magnetic particles to flow through the second electromagnetic trap. The method 400c continues with activating the first electromagnetic trap (as described elsewhere herein) to confine the magnetic particles within the first electromagnetic trap, operation 404c. After activating the first electromagnetic trap 404c, the method 400c proceeds to introducing a second batch of magnetic particles, operation 420c. In this example, the second batch of magnetic particles are introduced into the first open end of the fluid conduit, operation 422c. The method 400c continues with activating the second electromagnetic trap to trap the second batch of magnetic particles within the second electromagnetic trap, operation 424c. The first electromagnetic trap remains activated while the second electromagnetic trap is activated, so the first and second batches of magnetic particles are confined and mixing within their respective traps. Having activated both electromagnetic traps, a flow of a fluid sample is introduced, operation 408c. Introducing the flow of the fluid sample includes flowing the fluid sample through the first and second electromagnetic traps, into the first open end and out of the second open end of the fluid conduit.

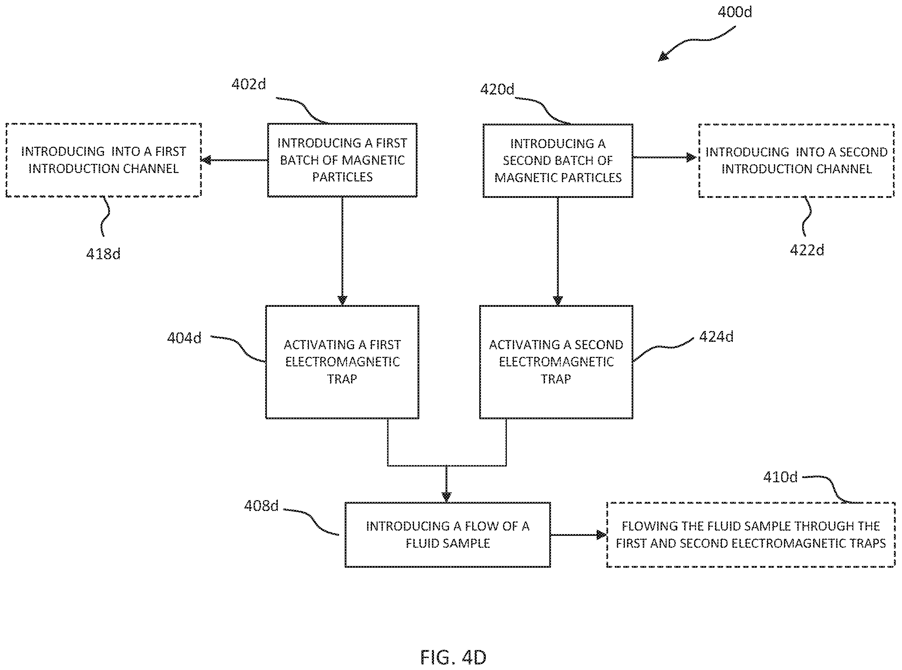

The electromagnetic traps may then be deactivated. As described elsewhere herein, deactivating includes first turning off any electrical signal being sent to the first electromagnetic trap, thereby releasing the first batch of magnetic particles from the first electromagnetic trap to flow downstream and out the second open end, where they may be collected in a collector fluidically coupled to the second open end. After the first batch of magnetic particles have flowed out the second open end, the second electromagnetic trap can be deactivated, thus releasing the second batch of magnetic particles from the second electromagnetic trap, where they flow downstream, through the deactivated first electromagnetic trap, and out the second open end. The method depicted in FIG. 4C is an example of serial loading of magnetic particles, where the magnetic particles are loaded into the fluid conduit one batch at a time, with the first batch traveling to the electromagnetic trap furthest downstream. A subsequent batch travels to the electromagnetic trap upstream. Serial loading is contrasted with the method depicted in FIG. 4D, which is an example of parallel loading using introduction channels. Parallel loading uses separate introduction channels positioned immediately upstream of each electromagnetic trap so different batches of magnetic particles can be introduced substantially directly into their respective electromagnetic traps. In examples of parallel loading, the different batches of magnetic particles can be introduced at substantially the same time as one another.

FIG. 4D depicts another example method 400d for processing a fluid sample using a system having a second electromagnetic trap disposed between a first open end and a first electromagnetic trap, and first and second introduction channels. Such a system is described elsewhere herein, for example, in FIG. 3D. The method 400d begins with introducing a first batch of magnetic particles, operation 402d. Introducing the first batch of magnetic particles includes introducing the first batch of magnetic particles into a first introduction channel, operation 418d, which is disposed immediately upstream of the first electromagnetic trap. At substantially the same time as the first batch of magnetic particles are introduced, or at a different time, a second batch of magnetic particles is introduced, operation 420d, for example, via a second introduction channel, operation 422d which is disposed immediately upstream of the first open end. A person of ordinary skill in the art would readily understand that the example systems and methods depicted in FIGS. 3C, 3D, 4C, and 4D may be carried out using more than two electromagnetic traps. Further, multiple batches of electromagnetic particles may be introduced sequentially into one or more of the depicted traps.

Method 400d then proceeds to activating the first and second electromagnetic traps 404d, 424d to confine and mix the magnetic particles within the electromagnetic traps. The first and second electromagnetic traps may be activated at substantially the same time, or at different times. After activating both the first and second electromagnetic traps, operations 404d and 424d, a flow of a fluid sample is introduced through an open end of the fluid sample channel, operation 408d. Introducing the flow of the fluid sample includes flowing the fluid sample through the first and second electromagnetic traps between the first open end and the second open end of the fluid conduit, operation 410d. Thereafter, the electromagnetic traps may be deactivated, for example, is described in FIG. 4C. Deactivating the first and second magnetic traps in the sequence described elsewhere herein allows the magnetic particles to simply flow out of the second open end of the fluid conduit.

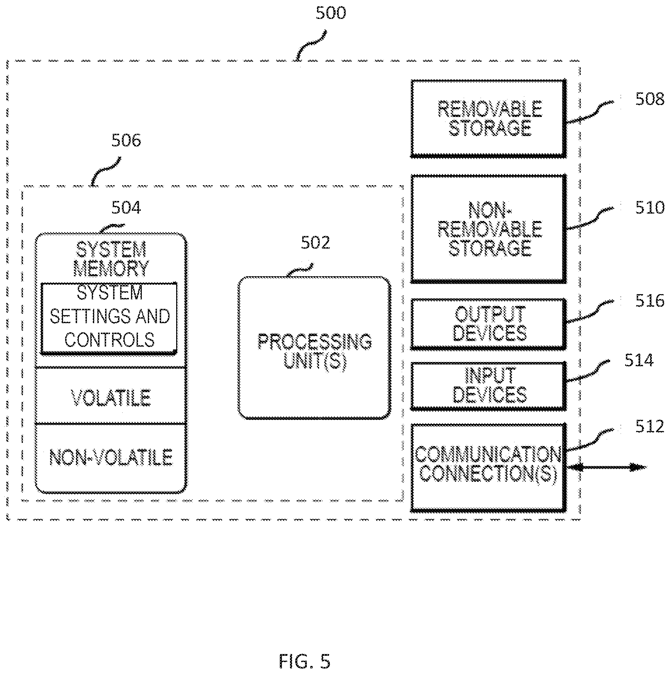

FIG. 5 illustrates one example of a suitable operating environment 500 in which one or more of the present examples can be implemented. This operating environment may be incorporated directly into the controller for a fluid processing system, e.g., such as the controller depicted in FIG. 1. This is only one example of a suitable operating environment and is not intended to suggest any limitation as to the scope of use or functionality. Other well- known computing systems, environments, and/or configurations that can be suitable for use include, but are not limited to, personal computers, server computers, hand-held or laptop devices, multiprocessor systems, microprocessor-based systems, programmable consumer electronics such as smart phones, network PCs, minicomputers, mainframe computers, tablets, distributed computing environments that include any of the above systems or devices, and the like. In view of the portability of the processing systems described herein, a laptop or tablet computer may be desirably connected via a wired or wireless connection to a controller such as depicted in FIG. 1, and may send the appropriate control signals before, during, and after a sampling event, so as to control operation of the various components of the system.

In its most basic configuration, operating environment 500 typically includes at least one processing unit 502 and memory 504. Depending on the exact configuration and type of computing device, memory 504 (storing, among other things, instructions to control the pump, signal generators for the electromagnets, sensors, valves, etc., or perform other methods disclosed herein) can be volatile (such as RAM), non-volatile (such as ROM, flash memory, etc.), or some combination of the two. This most basic configuration is illustrated in FIG. 5 by dashed line 506. Further, environment 500 can also include storage devices (removable, 508, and/or non-removable, 510) including, but not limited to, magnetic or optical disks or tape. Similarly, environment 500 can also have input device(s) 514 such as touch screens, keyboard, mouse, pen, voice input, etc., and/or output device(s) 516 such as a display, speakers, printer, etc. Also included in the environment can be one or more communication connections 512, such as LAN, WAN, point to point, Bluetooth, RF, etc.

Operating environment 500 typically includes at least some form of computer readable media. Computer readable media can be any available media that can be accessed by processing unit 502 or other devices having the operating environment. By way of example, and not limitation, computer readable media can include computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, solid state storage, or any other tangible medium which can be used to store the desired information. Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media. A computer-readable device is a hardware device incorporating computer storage media.

The operating environment 500 can be a single computer operating in a networked environment using logical connections to one or more remote computers. The remote computer can be a personal computer, a server, a router, a network PC, a peer device or other common network node, and typically includes many or all of the elements described above as well as others not so mentioned. The logical connections can include any method supported by available communications media. Such networking environments are commonplace in offices, enterprise-wide computer networks, intranets and the Internet.

In some examples, the components described herein include such modules or instructions executable by computer system 500 that can be stored on computer storage medium and other tangible mediums and transmitted in communication media. Computer storage media includes volatile and non-volatile, removable and non- removable media implemented in any method or technology for storage of information such as computer readable instructions, data structures, program modules, or other data. Combinations of any of the above should also be included within the scope of readable media. In some examples, computer system 500 is part of a network that stores data in remote storage media for use by the computer system 500.

This disclosure described some examples of the present technology with reference to the accompanying drawings, in which only some of the possible examples were shown. Other aspects can, however, be embodied in many different forms within the scope of the appended claims not limited to the examples set forth herein. Rather, these examples were provided so that this disclosure was thorough and complete and fully conveyed the scope of the possible examples to those skilled in the art.

Although specific examples were described herein, the scope of the technology is not limited to those specific examples, but is limited by the appended claims. One skilled in the art will recognize other examples or improvements that are within the scope of the present claims. Therefore, the specific structure, acts, or media are disclosed only as illustrative examples. The scope of the technology is defined by the following claims.

## Claims

1. A method for processing a fluid sample from a fluid body at the source, the fluid sample containing a first target analyte, the method comprising:
introducing a first batch of magnetic particles (125, 312a, 312b, 312c, 312d) into a fluid conduit, the fluid conduit comprising a first open end (121, 304a, 304b, 304c, 304d), a second open end (123, 306a, 306b, 306c, 306d), and a first electromagnetic trap (110, 308a, 308b, 308c, 308d) between the first open end (121, 304a, 304b, 304c, 304d) and the second open end (123, 306a, 306b, 306c, 306d), wherein the magnetic particles (125, 312a, 312b, 312c, 312d) comprise a first receptor to bind the first target analyte in the fluid sample;
activating the first electromagnetic trap (110, 308a, 308b, 308c, 308d) to trap and mix the magnetic particles (125, 312a, 312b, 312c, 312d) within the first electromagnetic trap (110, 308a, 308b, 308c, 308d)
introducing a flow of the fluid sample through the fluid conduit from the first open end (121, 304a, 304b, 304c, 304d), into which the fluid sample flows, to the second open end (123, 306a, 306b, 306c, 306d), out of which the fluid sample flows, wherein an AC current received by the first electromagnetic trap (110, 308a, 308b, 308c, 308d) mixes the magnetic particles (125, 312a, 312b, 312c, 312d) and the fluid sample within the first electromagnetic trap (110, 308a, 308b, 308c, 308d); and
deactivating the first electromagnetic trap (110, 308a, 308b, 308c, 308d) to release the magnetic particles (125, 312a, 312b, 312c, 312d) from the first electromagnetic trap (110, 308a, 308b, 308c, 308d).

2. The method of claim 1, wherein one or more of:
a) activating the first electromagnetic trap (110, 308a, 308b, 308c, 308d) comprises switching an electrical signal being received by the first electromagnetic trap (110, 308a, 308b, 308c, 308d) from a DC current to the AC current.
b) deactivating the first electromagnetic trap (110, 308a, 308b, 308c, 308d) comprises terminating an electrical signal sent to the first electromagnetic trap (110, 308a, 308b, 308c, 308d);
c) introducing the first batch of magnetic particles (125, 312a, 312b, 312c, 312d) and introducing the flow of the fluid sample are performed substantially simultaneously;
d) introducing the flow of the fluid sample comprises flowing the fluid sample through the first electromagnetic trap (110, 308a, 308b, 308c, 308d) between the first open end (121, 304a, 304b, 304c, 304d) and the second open end (123, 306a, 306b, 306c, 306d); and
e) the fluid sample flowrate through the fluid conduit is greater than about 1 liter per minute.

3. The method of claim 1 or 2, the method further comprising one or both of:
a) subsequent to activating the first electromagnetic trap (110, 308a, 308b, 308c, 308d), trapping the first batch of magnetic particles (125, 312a, 312b, 312c, 312d) within the first electromagnetic trap (110, 308a, 308b, 308c, 308d) while substantially simultaneously flowing the fluid sample through the first electromagnetic trap (110, 308a, 308b, 308c, 308d) between the first open end (121, 304a, 304b, 304c, 304d) and the second open end (123, 306a, 306b, 306c, 306d); and
b) collecting the magnetic particles (125, 312a, 312b, 312c, 312d) in a collection apparatus.

4. The method of any of claims 1-3, wherein the fluid conduit further comprises a second electromagnetic trap (328c, 328d) disposed upstream of the first electromagnetic trap (308c, 308d), and wherein introducing the first batch of magnetic particles (312c, 312d) into the fluid conduit comprises introducing the first batch of magnetic particles (312c, 312d) into the first open end (304c, 304d) of the fluid conduit, and wherein the method further comprises:
after activating the first electromagnetic trap (308c, 308d), introducing a second batch of magnetic particles (312c', 312d') into the first open end (304c, 304d), wherein the second batch of magnetic particles (312c', 312d') comprise a second receptor to bind a second target analyte in the fluid sample; and
activating the second electromagnetic trap (328c, 328d) to trap the second batch of magnetic particles (312c', 312d') within the second electromagnetic trap (328c, 328d).

5. The method of any of claims 1-4, wherein the fluid conduit further comprises a second electromagnetic trap (328d) disposed upstream of the first electromagnetic trap (308d), a first introduction channel (320d) disposed immediately upstream of the first electromagnetic trap (308d), and a second introduction channel (330d) disposed immediately upstream of the second electromagnetic trap (328d), and wherein the method further comprises:
introducing the first batch of magnetic particles (312d) into the first introduction channel (320d);
introducing a second batch of magnetic particles (312d') into the second introduction channel (330d);
and
activating the second electromagnetic trap (328d) to trap the second batch of magnetic particles (312d') within the second electromagnetic trap (328d).

6. The method of any of claims 1-5, wherein:
the first electromagnetic trap (110, 308a, 308b, 308c, 308d) is defined by a first volume; and
the fluid sample comprises a second volume greater than the first volume.

7. A system for processing a fluid sample from a fluid body at the source, the fluid sample containing a target analyte, the system comprising:
a fluid conduit (302a, 302b, 302c, 302d) comprising a first open end (121, 304a, 304b, 304c, 304d) and a second open end (123, 306a, 306b, 306c, 306d), wherein the first open end (121, 304a, 304b, 304c, 304d) is configured to receive the fluid sample, into which the fluid sample flows, and the second open end (123, 306a, 306b, 306c, 306d) is configured to release the fluid sample, out of which the fluid sample flows; and
a first electromagnetic trap (110, 308a, 308b, 308c, 308d) disposed between the first open end (121, 304a, 304b, 304c, 304d) and the second open end (123, 306a, 306b, 306c, 306d), wherein the first electromagnetic trap (110, 308a, 308b, 308c, 308d) comprises at least one electromagnet (310a, 310b, 310c, 310d) configured to receive an electrical signal to generate a magnetic field within the first electromagnetic trap (110, 308a, 308b, 308c, 308d),
the system further comprising a controller operably connected to the first electromagnetic trap (110, 308a, 308b, 308c, 308d) and configured to control the electrical signal sent to the at least one electromagnet (310a, 310b, 310c, 310d),
wherein the electrical signal comprises an AC current and the magnetic field is such that magnetic particles (125, 312a, 312b, 312c, 312d) introduced into the fluid conduit are trapped and mixed with the fluid sample within the first electromagnetic trap (110, 308a, 308b, 308c, 308d).

8. The system of claim 7, wherein the first electromagnetic trap (110, 308a, 308b, 308c, 308d) comprises a plurality of electromagnets (310a, 310b, 310c, 310d) disposed around the fluid conduit.

9. The system of claim 7 or 8, the system further comprising a second electromagnetic trap (328c, 328d) disposed between the first open end (304c, 304d) and the first electromagnetic trap (308c, 308d), optionally wherein the system further comprises a first introduction channel (320d) fluidically coupled to the fluid conduit and a) the first introduction channel (320d) is disposed between the first electromagnetic trap (308d) and the second electromagnetic trap (328d); and/or b) the first introduction channel (320d) is disposed immediately upstream of the first electromagnetic trap (308d) and the system further comprises a second introduction channel (330d) fluidically coupled to the fluid conduit and disposed immediately upstream of the second electromagnetic trap (328d).

10. The system of any of claim 7-9, the system further comprising one or both of:
a) a first introduction channel (320c, 320d) fluidically coupled to the fluid conduit and disposed immediately upstream of the first electromagnetic trap (308c, 308d); and
b) a collector (112) disposed downstream of the second open end (123, 306a, 306b, 306c, 306d) of the fluid conduit.

11. The system of any of claims 7 to 10, further comprising a pump (106) comprising an inlet and an outlet, wherein
the fluid conduit is disposed upstream of the pump (106);
the second open end (123, 306a, 306b, 306c, 306d) is disposed immediately upstream of the pump inlet; and
the controller (108) is operably connected to the pump (106), wherein the controller (108) is also configured to provide a control signal to the pump (106).

12. The system of claim 11, further comprising one or both of:
a) a container disposed downstream of the pump outlet; and
b) an introduction channel (320c, 320d) connected to the fluid conduit immediately upstream of the first open end (121, 304a, 304b, 304c, 304d).

13. The system of any of claims 7 to 12, wherein:
the first electromagnetic trap (110, 308a, 308b, 308c, 308d) is defined by a first volume; and
the fluid sample has a second volume greater than the first volume.

14. The system of claim 13, further comprising a plurality of magnetic particles (125, 312a, 312b, 312c, 312d) configured to mix within the first electromagnetic trap (110, 308a, 308b, 308c, 308d) in response to the electrical signal.

## Patentansprüche

1. Verfahren zur Verarbeitung einer Flüssigkeitsprobe aus einem Fluidkörper an der Quelle, wobei die Flüssigkeitsprobe einen ersten Zielanalyt enthält, das Verfahren umfassend:
Einführen eines ersten Satzes magnetischer Partikel (125, 312a, 312b, 312c, 312d) in eine Fluidleitung, wobei die Fluidleitung ein erstes offenes Ende (121, 304a, 304b, 304c, 304d), ein zweites offenes Ende (123, 306a, 306b, 306c, 306d) und eine erste elektromagnetische Falle (110, 308a, 308b, 308c, 308d) zwischen dem ersten offenen Ende (121, 304a, 304b, 304c, 304d) und dem zweiten offenen Ende (123, 306a, 306b, 306c, 306d) umfasst, wobei die magnetischen Partikel (125, 312a, 312b, 312c, 312d) einen ersten Rezeptor umfassen, um den ersten Zielanalyt in der Flüssigkeitsprobe zu binden;
Aktivieren der ersten elektromagnetischen Falle (110, 308a, 308b, 308c, 308d), um die magnetischen Partikel (125, 312a, 312b, 312c, 312d) innerhalb der ersten elektromagnetischen Falle (110, 308a, 308b, 308c, 308d) zu fangen und zu mischen
Einführen eines Flusses der Flüssigkeitsprobe durch die Fluidleitung von dem ersten offenen Ende (121, 304a, 304b, 304c, 304d), in das die Flüssigkeitsprobe fließt, zu dem zweiten offenen Ende (123, 306a, 306b, 306c, 306d), aus dem die Flüssigkeitsprobe fließt, wobei ein von der ersten elektromagnetischen Falle (110, 308a, 308b, 308c, 308d) empfangener Wechselstrom die magnetischen Partikel (125, 312a, 312b, 312c, 312d) und die Flüssigkeitsprobe innerhalb der ersten elektromagnetischen Falle (110, 308a, 308b, 308c, 308d) mischt; und
Deaktivieren der ersten elektromagnetischen Falle (110, 308a, 308b, 308c, 308d), um die magnetischen Partikel (125, 312a, 312b, 312c, 312d) aus der ersten elektromagnetischen Falle (110, 308a, 308b, 308c, 308d) freizugeben.

2. Verfahren nach Anspruch 1, wobei einer oder mehrere der folgenden Punkte zutreffen:
a) das Aktivieren der ersten elektromagnetischen Falle (110, 308a, 308b, 308c, 308d) umfasst ein Umschalten eines elektrischen Signals, das von der ersten elektromagnetischen Falle (110, 308a, 308b, 308c, 308d) empfangen wird, von einem Gleichstrom zu dem Wechselstrom;
b) das Deaktivieren der ersten elektromagnetischen Falle (110, 308a, 308b, 308c, 308d) umfasst ein Beenden eines elektrischen Signals, das an die erste elektromagnetische Falle (110, 308a, 308b, 308c, 308d) gesendet wird;
c) das Einführen des ersten Satzes magnetischer Partikel (125, 312a, 312b, 312c, 312d) und das Einführen des Flusses der Flüssigkeitsprobe werden im Wesentlichen gleichzeitig durchgeführt;
d) das Einführen des Flusses der Flüssigkeitsprobe umfasst ein Durchleiten der Flüssigkeitsprobe durch die erste elektromagnetische Falle (110, 308a, 308b, 308c, 308d) zwischen dem ersten offenen Ende (121, 304a, 304b, 304c, 304d) und dem zweiten offenen Ende (123, 306a, 306b, 306c, 306d); und
e) die Durchflussrate der Flüssigkeitsprobe durch die Fluidleitung größer als etwa 1 Liter pro Minute ist.

3. Verfahren nach Anspruch 1 oder 2, wobei das Verfahren weiter eines oder beides von Folgendem umfasst:
a) nach dem Aktivieren der ersten elektromagnetischen Falle (110, 308a, 308b, 308c, 308d), fangen en ersten Satz magnetischer Partikel (125, 312a, 312b, 312c, 312d) innerhalb der ersten elektromagnetischen Falle (110, 308a, 308b, 308c, 308d), während im Wesentlichen gleichzeitig die Flüssigkeitsprobe durch die erste elektromagnetische Falle (110, 308a, 308b, 308c, 308d) zwischen dem ersten offenen Ende (121, 304a, 304b, 304c, 304d) und dem zweiten offenen Ende (123, 306a, 306b, 306c, 306d) geleitet wird; und
b) Sammeln der magnetischen Partikel (125, 312a, 312b, 312c, 312d) in einer Sammelvorrichtung.

4. Verfahren nach einem der Ansprüche 1-3, wobei die Fluidleitung weiter eine zweite elektromagnetische Falle (328c, 328d) umfasst, die stromaufwärts der ersten elektromagnetischen Falle (308c, 308d) angeordnet ist, und wobei das Einführen des ersten Satzes magnetischer Partikel (312c, 312d) in die Fluidleitung das Einführen des ersten Satzes magnetischer Partikel (312c, 312d) in das erste offene Ende (304c, 304d) der Fluidleitung umfasst, und wobei das Verfahren weiter umfasst:
nach dem Aktivieren der ersten elektromagnetischen Falle (308c, 308d), Einführen eines zweiten Satzes magnetischer Partikel (312c', 312d') in das erste offene Ende (304c, 304d), wobei der zweite Satz magnetischer Partikel (312c', 312d') einen zweiten Rezeptor umfasst, um einen zweiten Zielanalyt in der Flüssigkeitsprobe zu binden; und
Aktivieren der zweiten elektromagnetischen Falle (328c, 328d), um den zweiten Satz magnetischer Partikel (312c', 312d') innerhalb der zweiten elektromagnetischen Falle (328c, 328d) zu fangen.

5. Verfahren nach einem der Ansprüche 1-4, wobei die Fluidleitung weiter eine zweite elektromagnetische Falle (328d) umfasst, die stromaufwärts der ersten elektromagnetischen Falle (308d) angeordnet ist, einen ersten Einführkanal (320d), der unmittelbar stromaufwärts der ersten elektromagnetischen Falle (308d) angeordnet ist, und einen zweiten Einführkanal (330d), der unmittelbar stromaufwärts der zweiten elektromagnetischen Falle (328d) angeordnet ist, und wobei das Verfahren weiter umfasst:
Einführen des ersten Satzes magnetischer Partikel (312d) in den ersten Einführkanal (320d);
Einführen eines zweiten Satzes magnetischer Partikel (312d') in den zweiten Einführkanal (330d); und
Aktivieren der zweiten elektromagnetischen Falle (328d), um den zweiten Satz magnetischer Partikel (312d') innerhalb der zweiten elektromagnetischen Falle (328d) zu fangen.

6. Verfahren nach einem der Ansprüche 1-5, wobei:
die erste elektromagnetische Falle (110, 308a, 308b, 308c, 308d) durch ein erstes Volumen definiert ist; und
die Flüssigkeitsprobe ein zweites Volumen, das größer als das erste Volumen ist, umfasst.

7. System zur Verarbeitung einer Flüssigkeitsprobe aus einem Fluidkörper an der Quelle, wobei die Flüssigkeitsprobe einen Zielanalyt enthält, das System umfassend:
eine Fluidleitung (302a, 302b, 302c, 302d), die ein erstes offenes Ende (121, 304a, 304b, 304c, 304d) und ein zweites offenes Ende (123, 306a, 306b, 306c, 306d) umfasst, wobei das erste offene Ende (121, 304a, 304b, 304c, 304d) ausgebildet ist, um die Flüssigkeitsprobe zu empfangen, in das die Flüssigkeitsprobe fließt, und das zweite offene Ende (123, 306a, 306b, 306c, 306d) ausgebildet ist, um die Flüssigkeitsprobe freizugeben, aus dem die Flüssigkeitsprobe fließt; und
eine erste elektromagnetische Falle (110, 308a, 308b, 308c, 308d), die zwischen dem ersten offenen Ende (121, 304a, 304b, 304c, 304d) und dem zweiten offenen Ende (123, 306a, 306b, 306c, 306d) angeordnet ist, wobei die erste elektromagnetische Falle (110, 308a, 308b, 308c, 308d) mindestens einen Elektromagneten (310a, 310b, 310c, 310d) umfasst, der ausgebildet ist, um ein elektrisches Signal zu empfangen, um ein Magnetfeld innerhalb der ersten elektromagnetischen Falle (110, 308a, 308b, 308c, 308d) zu erzeugen,
das System weiter umfassend eine Steuereinheit, die betriebswirksam mit der ersten elektromagnetischen Falle (110, 308a, 308b, 308c, 308d) verbunden ist und ausgebildet ist, um das an den mindestens einen Elektromagneten (310a, 310b, 310c, 310d) gesendete elektrische Signal zu regeln,
wobei das elektrische Signal einen Wechselstrom umfasst und das Magnetfeld derart ist, dass magnetische Partikel (125, 312a, 312b, 312c, 312d), die in die Fluidleitung eingeführt werden, innerhalb der ersten elektromagnetischen Falle (110, 308a, 308b, 308c, 308d) gefangen und mit der Flüssigkeitsprobe gemischt werden.

8. System nach Anspruch 7, wobei die erste elektromagnetische Falle (110, 308a, 308b, 308c, 308d) eine Vielzahl von Elektromagneten (310a, 310b, 310c, 310d) umfasst, die um die Fluidleitung angeordnet sind.

9. System nach Anspruch 7 oder 8, wobei das System weiter eine zweite elektromagnetische Falle (328c, 328d) umfasst, die zwischen dem ersten offenen Ende (304c, 304d) und der ersten elektromagnetischen Falle (308c, 308d) angeordnet ist, wahlweise wobei das System weiter einen ersten Einführkanal (320d) umfasst, der fluidisch mit der Fluidleitung gekoppelt ist, und
a) der erste Einführkanal (320d) zwischen der ersten elektromagnetischen Falle (308d) und der zweiten elektromagnetischen Falle (328d) angeordnet ist; und/oder,
b) der erste Einführkanal (320d) unmittelbar stromaufwärts der ersten elektromagnetischen Falle (308d) angeordnet ist und das System weiter einen zweiten Einführkanal (330d) umfasst, der fluidisch mit der Fluidleitung gekoppelt ist und unmittelbar stromaufwärts der zweiten elektromagnetischen Falle (328d) angeordnet ist.

10. System nach einem der Ansprüche 7-9, das System weiter umfassend eines oder beide von:
a) einen ersten Einführkanal (320c, 320d), der fluidisch mit der Fluidleitung gekoppelt ist und unmittelbar stromaufwärts der ersten elektromagnetischen Falle (308c, 308d) angeordnet ist; und
b) einen Sammler (112), der stromabwärts des zweiten offenen Endes (123, 306a, 306b, 306c, 306d) der Fluidleitung angeordnet ist.

11. System nach einem der Ansprüche 7 bis 10, weiter umfassend eine Pumpe (106), die einen Einlass und einen Auslass umfasst, wobei
die Fluidleitung stromaufwärts der Pumpe (106) angeordnet ist;
das zweite offene Ende (123, 306a, 306b, 306c, 306d) unmittelbar stromaufwärts des Pumpeneinlasses angeordnet ist; und
die Steuereinheit (108) betriebswirksam mit der Pumpe (106) verbunden ist, wobei die Steuereinheit (108) auch ausgebildet ist, um der Pumpe (106) ein Steuersignal bereitzustellen.

12. System nach Anspruch 11, weiter umfassend eines oder beide von:
a) ein Behälter, der stromabwärts des Pumpenauslasses angeordnet ist; und,
b) ein Einführkanal (320c, 320d), der unmittelbar stromaufwärts des ersten offenen Endes (121, 304a, 304b, 304c, 304d) mit der Fluidleitung verbunden ist.

13. System nach einem der Ansprüche 7 bis 12, wobei:
die erste elektromagnetische Falle (110, 308a, 308b, 308c, 308d) durch ein erstes Volumen definiert ist; und
die Flüssigkeitsprobe ein zweites Volumen, das größer als das erste Volumen ist, aufweist.

14. System nach Anspruch 13, weiter umfassend eine Vielzahl von magnetischen Partikeln (125, 312a, 312b, 312c, 312d), die ausgebildet sind, um sich innerhalb der ersten elektromagnetischen Falle (110, 308a, 308b, 308c, 308d) in Reaktion auf das elektrische Signal zu mischen.

## Revendications

1. Procédé de traitement d'un échantillon fluide provenant d'un corps fluide à la source, l'échantillon fluide contenant un premier analyte cible, le procédé comprenant :
l'introduction d'un premier lot (125, 312a, 312b, 312c, 312d) de particules magnétiques dans un conduit de fluide, le conduit de fluide comprenant une première extrémité ouverte (121, 304a, 304b, 304c, 304d), une deuxième extrémité ouverte (123, 306a, 306b, 306c, 306d), et un premier piège électromagnétique (110, 308a, 308b, 308c, 308d) entre la première extrémité ouverte (121, 304a, 304b, 304c, 304d) et la deuxième extrémité ouverte (123, 306a, 306b, 306c, 306d), dans lequel les particules magnétiques (125, 312a, 312b, 312c, 312d) comprennent un premier récepteur pour lier le premier analyte cible dans l'échantillon fluide ;
l'activation du premier piège électromagnétique (110, 308a, 308b, 308c, 308d) pour piéger et mélanger les particules magnétiques (125, 312a, 312b, 312c, 312d) au sein du premier piège électromagnétique (110, 308a, 308b, 308c, 308d)
l'introduction d'un flux de l'échantillon fluide à travers le conduit de fluide depuis la première extrémité ouverte (121, 304a, 304b, 304c, 304d), dans laquelle l'échantillon fluide s'écoule, jusqu'à la deuxième extrémité ouverte (123, 306a, 306b, 306c, 306d), à partir de laquelle l'échantillon fluide s'écoule, dans lequel un courant CA reçu par le premier piège électromagnétique (110, 308a, 308b, 308c, 308d) mélange les particules magnétiques (125, 312a, 312b, 312c, 312d) et l'échantillon fluide au sein du premier piège électromagnétique (110, 308a, 308b, 308c, 308d) ; et
la désactivation du premier piège électromagnétique (110, 308a, 308b, 308c, 308d) pour libérer les particules magnétiques (125, 312a, 312b, 312c, 312d) du premier piège électromagnétique (110, 308a, 308b, 308c, 308d).

2. Procédé selon la revendication 1, dans lequel l'un ou l'une ou plusieurs de :
a) l'activation du premier piège électromagnétique (110, 308a, 308b, 308c, 308d) comprend la commutation d'un signal électrique étant reçu par le premier piège électromagnétique (110, 308a, 308b, 308c, 308d) d'un courant CC vers le courant CA ;
b) la désactivation du premier piège électromagnétique (110, 308a, 308b, 308c, 308d) comprend l'arrêt d'un signal électrique envoyé au premier piège électromagnétique (110, 308a, 308b, 308c, 308d) ;
c) l'introduction du premier lot (125, 312a, 312b, 312c, 312d) de particules magnétiques et l'introduction du flux de l'échantillon fluide sont réalisées sensiblement simultanément ;
d) l'introduction du flux de l'échantillon fluide comprend l'écoulement de l'échantillon fluide à travers le premier piège électromagnétique (110, 308a, 308b, 308c, 308d) entre la première extrémité ouverte (121, 304a, 304b, 304c, 304d) et la deuxième extrémité ouverte (123, 306a, 306b, 306c, 306d) ; et
e) le débit de l'échantillon fluide à travers le conduit de fluide est supérieur à environ 1 litre par minute.

3. Procédé selon la revendication 1 ou la revendication 2, le procédé comprenant en outre un ou une ou les deux :
a) postérieurement à l'activation du premier piège électromagnétique (110, 308a, 308b, 308c, 308d), du piégeage du premier lot (125, 312a, 312b, 312c, 312d) de particules magnétiques au sein du premier piège électromagnétique (110, 308a, 308b, 308c, 308d) tout en faisant s'écouler sensiblement simultanément l'échantillon fluide à travers le premier piège électromagnétique (110, 308a, 308b, 308c, 308d) entre la première extrémité ouverte (121, 304a, 304b, 304c, 304d) et la deuxième extrémité ouverte (123, 306a, 306b, 306c, 306d) ; et
b) de la collecte des particules magnétiques (125, 312a, 312b, 312c, 312d) dans un appareil de collecte.

4. Procédé selon l'une quelconque des revendications 1 à 3, dans lequel le conduit de fluide comprend en outre un deuxième piège électromagnétique (328c, 328d) disposé en amont du premier piège électromagnétique (308c, 308d), et
dans lequel l'introduction du premier lot (312c, 312d) de particules magnétiques dans le conduit de fluide comprend l'introduction du premier lot (312c, 312d) de particules magnétiques dans la première extrémité ouverte (304c, 304d) du conduit de fluide, et dans lequel le procédé comprend en outre :
après avoir activé le premier piège électromagnétique (308c, 308d), l'introduction d'un deuxième lot (312c', 312d') de particules magnétiques dans la première extrémité ouverte (304c, 304d), dans lequel le deuxième lot (312c', 312d') de particules magnétiques comprend un deuxième récepteur pour lier un deuxième analyte cible dans l'échantillon fluide ; et
l'activation du deuxième piège électromagnétique (328c, 328d) pour piéger le deuxième lot (312c', 312d') de particules magnétiques au sein du deuxième piège électromagnétique (328c, 328d).

5. Procédé selon l'une quelconque des revendications 1 à 4, dans lequel le conduit de fluide comprend en outre un deuxième piège électromagnétique (328d) disposé en amont du premier piège électromagnétique (308d), un premier canal d'introduction (320d) disposé immédiatement en amont du premier piège électromagnétique (308d), et un deuxième canal d'introduction (330d) disposé immédiatement en amont du deuxième piège électromagnétique (328d), et dans lequel le procédé comprend en outre :
l'introduction du premier lot (312d) de particules magnétiques dans le premier canal d'introduction (320d) ;
l'introduction d'un deuxième lot (312d') de particules magnétiques dans le deuxième canal d'introduction (330d) ; et
l'activation du deuxième piège électromagnétique (328d) pour piéger le deuxième lot (312d') de particules magnétiques au sein du deuxième piège électromagnétique (328d).

6. Procédé selon l'une quelconque des revendications 1 à 5, dans lequel :
le premier piège électromagnétique (110, 308a, 308b, 308c, 308d) est défini par un premier volume ; et
l'échantillon fluide comprend un deuxième volume supérieur au premier volume.

7. Système de traitement d'un échantillon fluide provenant d'un corps fluide à la source, l'échantillon fluide contenant un analyte cible, le système comprenant :
un conduit de fluide (302a, 302b, 302c, 302d) comprenant une première extrémité ouverte (121, 304a, 304b, 304c, 304d) et une deuxième extrémité ouverte (123, 306a, 306b, 306c, 306d), dans lequel la première extrémité ouverte (121, 304a, 304b, 304c, 304d) est configurée pour recevoir l'échantillon fluide, dans laquelle l'échantillon fluide s'écoule, et la deuxième extrémité ouverte (123, 306a, 306b, 306c, 306d) est configurée pour libérer l'échantillon fluide, à partir de laquelle l'échantillon fluide s'écoule ; et
un premier piège électromagnétique (110, 308a, 308b, 308c, 308d) disposé entre la première extrémité ouverte (121, 304a, 304b, 304c, 304d) et la deuxième extrémité ouverte (123, 306a, 306b, 306c, 306d), dans lequel le premier piège électromagnétique (110, 308a, 308b, 308c, 308d) comprend au moins un électroaimant (310a, 310b, 310c, 310d) configuré pour recevoir un signal électrique afin de générer un champ magnétique au sein du premier piège électromagnétique (110, 308a, 308b, 308c, 308d),
le système comprenant en outre un dispositif de commande relié fonctionnellement au premier piège électromagnétique (110, 308a, 308b, 308c, 308d) et configuré pour commander le signal électrique envoyé au au moins un électroaimant (310a, 310b, 310c, 310d),
dans lequel le signal électrique comprend un courant CA et le champ magnétique est tel que des particules magnétiques (125, 312a, 312b, 312c, 312d) introduites dans le conduit de fluide sont piégées et mélangées avec l'échantillon fluide au sein du premier piège électromagnétique (110, 308a, 308b, 308c, 308d).

8. Système selon la revendication 7, dans lequel le premier piège électromagnétique (110, 308a, 308b, 308c, 308d) comprend une pluralité d'électroaimants (310a, 310b, 310c, 310d) disposés autour du conduit de fluide.

9. Système selon la revendication 7 ou la revendication 8, le système comprenant en outre un deuxième piège électromagnétique (328c, 328d) disposé entre la première extrémité ouverte (304c, 304d) et le premier piège électromagnétique (308c, 308d), éventuellement, dans lequel le système comprend en outre un premier canal d'introduction (320d) couplé fluidiquement au conduit de fluide et
a) le premier canal d'introduction (320d) est disposé entre le premier piège électromagnétique (308d) et le deuxième piège électromagnétique (328d) ; et/ou
b) le premier canal d'introduction (320d) est disposé immédiatement en amont du premier piège électromagnétique (308d) et le système comprend en outre un deuxième canal d'introduction (330d) couplé fluidiquement au conduit de fluide et disposé immédiatement en amont du deuxième piège électromagnétique (328d).

10. Système selon l'une quelconque des revendications 7 à 9, le système comprenant en outre un ou les deux :
a) d'un premier canal d'introduction (320c, 320d) couplé fluidiquement au conduit de fluide et disposé immédiatement en amont du premier piège électromagnétique (308c, 308d) ; et
b) d'un collecteur (112) disposé en aval de la deuxième extrémité ouverte (123, 306a, 306b, 306c, 306d) du conduit de fluide.

11. Système selon l'une quelconque des revendications 7 à 10, comprenant en outre une pompe (106) comprenant une entrée et une sortie, dans lequel
le conduit de fluide est disposé en amont de la pompe (106) ;
la deuxième extrémité ouverte (123, 306a, 306b, 306c, 306d) est disposée immédiatement en amont de l'entrée de pompe ; et
le dispositif de commande (108) est relié fonctionnellement à la pompe (106), dans lequel le dispositif de commande (108) est également configuré pour fournir un signal de commande à la pompe (106).

12. Système selon la revendication 11, comprenant en outre un ou les deux :
a) d'un récipient disposé en aval de la sortie de pompe ; et
b) d'un canal d'introduction (320c, 320d) relié au conduit de fluide immédiatement en amont de la première extrémité ouverte (121, 304a, 304b, 304c, 304d).

13. Système selon l'une quelconque des revendications 7 à 12, dans lequel :
le premier piège électromagnétique (110, 308a, 308b, 308c, 308d) est défini par un premier volume ; et
l'échantillon fluide présente un deuxième volume supérieur au premier volume.

14. Système selon la revendication 13, comprenant en outre une pluralité de particules magnétiques (125, 312a, 312b, 312c, 312d) configurées pour se mélanger au sein du premier piège électromagnétique (110, 308a, 308b, 308c, 308d) en réponse au signal électrique.
